(19) Europäisches Patentamt
European Patent Office
Office européen des brevets

(11) Veröffentlichungsnummer: **0 273 014 B1**

(12) **EUROPÄISCHE PATENTSCHRIFT**

(45) Veröffentlichungstag der Patentschrift: **26.01.94**

(51) Int. Cl.$^5$: **A01N 59/26**, C01B 25/168

(21) Anmeldenummer: **87810768.9**

(22) Anmeldetag: **18.12.87**

# (54) Pflanzenfungizide Mittel enthaltend als Wirstoffe Salze der pyrophosphorigen Säure und ihre Anwendung.

(30) Priorität: **23.12.86 CH 5202/86**

(43) Veröffentlichungstag der Anmeldung:
**29.06.88 Patentblatt 88/26**

(45) Bekanntmachung des Hinweises auf die Patenterteilung:
**26.01.94 Patentblatt 94/04**

(84) Benannte Vertragsstaaten:
**AT BE CH DE ES FR GB GR IT LI NL**

(56) Entgegenhaltungen:
**DE-A- 2 453 401**
**DE-B- 1 567 703**

**COLLECTION CZECHOSLOV. CHEM. COMMUN., Band 43, no. 12, 1978, Seiten 3317-3324; M. EBERT et al.: "Diphosphites of bivalent metals"**

**CHEMICAL ABSTRACTS, Band 62, no. 3, 1. December 1965, Zusammenfassung Nr. 2500a, Columbus, Ohio, US; D. GRANT et al.: "The pyrolysis of inorganic phosphites", & JOURNAL OF INORGANIC AND NUCLEAR CHEMISTRY 26(12), 2103-11**

(73) Patentinhaber: **CIBA-GEIGY AG**
**Klybeckstrasse 141**
**CH-4002 Basel(CH)**

(72) Erfinder: **Maier, Ludwig, Dr.**
**Suryhofweg 24**
**CH-4144 Arlesheim(CH)**

**EP 0 273 014 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

R. DUBRISAY: "Nouveau Traité de Chimie Minérale" Band X: "Azote - phosphore", 1956, Seiten 811-812,917, Masson et Cie, Paris, FR; "Acide pyrophosphoreux H4P2O5", Seite 917: Referenz (571)

J. CHEM. SOC. (A) INORG. PHYS. THEOR., 1968, Seiten 1715-1717; W. McRARLANE: "Magnetic double resonance studies of complex spin systems: the sign of the P-O-P coupling constant"

T.A.C.S., Band 60, Januar 1938, Seiten 47-49, Gaston, US; S.J. KIEHL et al.: "Preparation of diammonium dihydrogen pyrophosphite"

GMELINS HANDBUCH DER ANORGANISCHEN CHEMIE, 8. völlig neu bearbeitete Auflage, "Phosphor", Teil C; "Die Verbindungen des Phosphors" System-Nummer 16, 1965, Seiten 139-142, Verlag Chemie GmbH, Weinheim, DE; "Pyrophosphorige Säure"

## Beschreibung

Die vorliegende Erfindung betrifft Mittel enthaltend pflanzenfungizid wirksame Salze der pyrophosphorigen Säure sowie die Anwendung solcher Salze bzw. Mittel.

Aus der US-P 4,075,324 ist bekannt geworden, dass bestimmte Salze der phosphorigen Säure fungizid wirksam sind. Diese Salze befriedigen nicht immer im Hinblick auf Wirkungsstärke und Wirkungsdauer.

Es wurde nun gefunden, dass Salze der pyrophosphorigen Säure eine verbesserte fungizide Wirkung aufweisen.

Die Erfindung betrifft insbesondere Salze der pyrophosphorigen Säure der Formel I

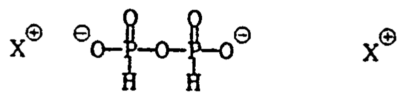

(I),

worin $X^{\oplus}$ für ein Kationenäquivalent ausgewählt aus der Gruppe Natrium, Kalium, Lithium, Beryllium, Magnesium, Aluminium, Zink, Mangan, Kupfer oder $NH_4$ steht.

Als Pflanzenfungizide bevorzugt sind Dilithiumpyrophosphit und ganz besonders Dinatriumpyrophosphit.

Aus der Literatur sind bisher nur wenige Salze der pyrophosphorigen Säure bekannt geworden.

Wenn X für ein einwertiges Kation steht, sind die Pyrophosphite der Formel I in Wasser löslich, während in den Fällen, in denen X für ein Kationenäquivalent eines zwei- oder dreiwertigen Kations steht, die entsprechenden Salze in Wasser schwer löslich bzw. unlöslich sind.

Während die in Wasser löslichen Verbindungen der Formel I sowohl in flüssiger als auch in fester Form formulierbar sind, ist bei den in Wasser schwer löslichen bzw. unlöslichen Verbindungen eine Formulierung als Feststoff, etwa als Staub, WP (= Spritzpulver) oder SC (= Suspensionskonzentrat) bevorzugt.

Die erfindungsgemässen Wirkstoffe der Formel I besitzen sehr vorteilhafte kurative und präventive Fungizid-Eigenschaften zum Schutz von Kulturpflanzen. Mit den vorliegenden Wirkstoffmischungen können an Pflanzen oder an Pflanzenteilen (Früchte, Blüten, Laubwerk, Stengel, Knollen, Wurzeln) von unterschiedlichen Nutzkulturen die auftretenden Mikroorganismen eingedämmt oder vernichtet werden.

Die Wirkstoffe sind gegen die den folgenden Klassen angehörenden phytopathogenen Pilze wirksam: Ascomyceten (z. B. Venturia, Podosphaera, Erysiphe, Monilinia, Uncinula); Basidiomyceten (z. B. die Gattungen Hemileia, Rhizoctonia, Puccinia); Fungi imperfecti (z. B. Botrytis, Helminthosporium, Fusarium, Septoria, Cercospora, Alternaria und insbesondere Pyricularia); dann aber besonders gegen die der Klasse der Phycomyceten angehörenden Oomyceten wie Phytophthora, Peronospora, Pseudoperonospora, Pythium oder Plasmopara. Die Wirkstoffe können auch als Beizmittel zur Behandlung von Saatgut (Früchte, Knollen, Körner) und Pflanzenstecklingen zum Schutz vor Pilzinfektionen sowie gegen im Erdboden auftretende phytopathogene Pilze eingesetzt werden. Die erfindungsgemässen Wirkstoffe zeichnen sich durch besonders gute Pflanzenverträglichkeit und durch ihre Umweltfreundlichkeit aus. Pyrophosphorige Säure und ihre Salze werden im Laufe der Zeit in lösliche Phosphate umgewandelt und dienen dementsprechend bei Erdboden-Applikationen später als Düngemittel. Dies trifft in besonderem Masse für Dinatriumpyrophosphit zu, das in Dinatriumphosphat abgebaut wird.

Als Zielkulturen für die hierin offenbarten Indikationsgebiete gelten im Rahmen dieser Erfindung z. B. folgende Pflanzenarten: Getreide: (Weizen, Gerste, Roggen, Hafer, Reis, Sorghum und Verwandte, wie z.B. Zierrasen (= Turf); Rüben: (Zucker- und Futterrüben); Kern-, Stein- und Beerenobst: (Aepfel, Birnen, Pflaumen, Pfirsiche, Mandeln, Kirschen, Erdbeeren, Himbeeren, Preiselbeeren, und Brombeeren); Hülsenfrüchte: (Bohnen, Linsen, Erbsen, Soja); Oelkulturen: (Raps, Senf, Mohn, Oliven, Sonnenblumen, Kokos, Rizinus, Kakao, Erdnüsse); Gurkengewächse: (Kürbis, Gurken, Melonen); Fasergewächse: (Baumwolle, Flachs, Hanf, Jute); Citrusfrüchte: (Orangen, Zitronen, Grapefruit, Mandarinen); Gemüsesorten: (Spinat, Kopfsalat, Spargel, Kohlarten, Möhren, Zwiebeln, Tomaten, Kartoffeln, Paprika); Lorbeergewächse: (Avocado, Cinnamonum, Kampfer) oder Pflanzen wie Mais, Tabak, Nüsse, Kaffee, Zuckerrohr, Ananas, Tee, Weinreben, Hopfen, Bananen- und Naturkautschukgewächse sowie Zierpflanzen (Blumen, Sträucher, Laubbäume und Nadelbäume wie Koniferen).

Die Wirkstoffe der Formel I werden auf die zu behandelnde Fläche oder Pflanze gegeben, zusammen mit gegebenenfalls weiteren in der Formulierungstechnik üblichen Trägerstoffen, Tensiden oder anderen applikationsfördernden Zusätzen.

Geeignete Träger und Zusätze können fest oder flüssig sein und entsprechen den in der Formulierungstechnik zweckdienlichen Stoffen, wie z.B. natürlichen oder regenerierten mineralischen Stoffen, Lösungs-, Dispergier-, Netz-, Haft-, Verdickungs-, Binde- oder Düngemitteln.

Es können auch weitere Fungizide zur Spektrumsverbreiterung zugemischt werden, z.B. Dithiocarbamate wie Zineb, Maneb und insbesondere Mancozeb.

Ein bevorzugtes Verfahen zum Aufbringen des Wirkstoffs ist das Aufbringen auf die oberirdischen Pflanzenteile, vor allem das Blattwerk (Blattapplikation). Anzahl der Applikationen und Aufwandmenge richten sich nach den biologischen und klimatischen Lebensbedingungen für den Erreger. Die Wirkstoffe können aber auch über den Erdboden durch das Wurzelwerk in die Pflanze gelangen, indem man den Standort der Pflanze mit einer flüssigen Zubereitung tränkt oder die Substanzen in fester Form in den Boden einbringt z.B. in Form von Granulat (Bodenapplikation). Die Verbindungen der Formel I können auch auf Samenkörner aufgebracht werden (Coating), indem man die Körner entweder nacheinander in einer flüssigen Zubereitung des Wirkstoffs tränkt oder sie mit einer bereits kombinierten Zubereitung beschichtet. Darüberhinaus sind in besonderen Fällen weitere Applikationsarten bei Pflanzen möglich, z.B. die gezielte Behandlung der Knospen oder der Fruchtstände.

Die Verbindungen der Formel I werden dabei in unveränderter Form oder vorzugsweise zusammen mit den in den Formulierungstechnik üblichen Hilfsmittel eingesetzt und werden daher z.B. zu Emulsionskonzentraten, streichfähigen Pasten, direkt versprühbaren oder verdünnbaren Lösungen, verdünnten Emulsionen, Spritzpulvern, löslichen Pulvern, Stäubemitteln, Granulaten, durch Verkapselungen in z.B. polymeren Stoffen in bekannter Weise verarbeitet. Die Anwendungsverfahren die Versprühen, Vernebeln, Verstäuben, Verstreuen, Bestreichen oder Giessen werden gleich wie die Art der Mittel den angestrebten Zielen und den gegebenen Verhältnissen entsprechend gewählt. Günstige Aufwandmengen liegen im allgemeinen bei 100 g bis 6 kg AS/ha, insbesondere bei 100 g bis 2000 g AS/ha.

Die Formulierungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Ether und Ester, wie Ethanol, Ethylenglykol, Ethylenglykolmonomethyl- oder Ethylether, Ketone wie Cyclohexanon, stark polare Lösungsmittel wie N-Methyl-2-pyrrolidon,Dimethylsulfoxid oder Dimethylformamid, sowie gegebenenfalls epoxydierte Pflanzenöle wie epoxydiertes Kokosnussöl oder Sojaöl; oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden. Besonders vorteilhafte, applikationsfördernde Zuschlagstoffe, die zu einer Reduktion der Aufwandmenge führen können, sind ferner natürliche (tierische oder pflanzliche) oder synthetische Phospholipide aus der Reihe der Kephaline und Lecithine. Synthetische Phospholipide sind z.B. Dioctanoylphosphatidylcholin und Dipalmitoylphosphatidylcholin.

Als oberflächenaktive Verbindungen kommen je nach Art der zu formulierenden Wirkstoffe der Formel I nichtionogene, kation-und/oder anionaktive Tenside mit guten Emulgier-, Dispergier- und Netzeigenschaften in Betracht. Unter Tensiden sind auch Tensidgemische zu verstehen.

Darüber hinaus schliesst die vorliegende Erfindung nach Verfahren zur Behandlung von Pflanzenkrankheiten ein, die sich durch Applikation der Verbindungen der Formel I bzw. der neuen Mittel auf die durch Infektion befallene oder gefährdete Stelle auszeichnen.

| <u>Spritzpulver</u> | a) | b) | c) |
|---|---|---|---|
| Wirkstoff der Formel I | 25 % | 50 % | 75 % |
| Na-Ligninsulfonat | 5 % | 5 % | |
| Na-Laurylsulfat | 3 % | - | 5 % |

| | | | |
|---|---|---|---|
| Na-Diisobutylnaphthalinsulfonat | - | 6 % | 10 % |
| Octylphenolpolyethylenglykolether (7-8 Mol Ethylenoxid) | - | 2 % | - |
| Hochdisperse Kieselsäure | 5 % | 10 % | 10 % |
| Kaolin | 62 % | 27 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| Emulsions-Konzentrat | |
|---|---|
| Wirkstoff der Formel I | 10 % |
| Octylphenolpolyethylenglykolether (4-5 Mol Ethylenoxid) | 3 % |
| Ca-Dodecylbenzolsulfonat | 3 % |
| Ricinusölpolyglykolether (35 Mol Ethylenoxid) | 4 % |
| Cyclohexanon | 30 % |
| Xylolgemisch | 50 % |

Aus diesem Konzentrat können durch Verdünnen mit Wasser Emulsionen jeder gewünschten Konzentration hergestellt werden.

| Stäubemittel | a) | b) |
|---|---|---|
| Wirkstoff der Formel I | 5 % | 8 % |
| Talkum | 95 % | - |
| Kaolin | - | 92 % |

Man erhält anwendungsfertige Stäubemittel, indem der Wirkstoff mit den Träger vermischt und auf einer geeigneten Mühle vermahlen wird.

| Extruder Granulat | |
|---|---|
| Wirkstoff der Formel I | 10 % |
| Na-Ligninsulfonat | 2 % |
| Carboxymethylcellulose | 1 % |
| Kaolin | 87 % |

Der Wirkstoff wird mit den Zusatzstoffen vermischt, vermahlen und mit Wasser angefeuchtet. Dieses Gemisch wird extrudiert und anschliessend im Luftstrom getrocknet.

| Umhüllungs-Granulat | |
|---|---|
| Wirkstoff der Formel I<br>Polyethylenglykol (MG 200)<br>Kaolin | 3 %<br>3 %<br>94 % |
| (MG = Molekulargewicht) | |

Der fein gemahlene Wirkstoff wird in einem Mischer auf das mit Polyethylenglykol angefeuchtete Kaolin gleichmässig aufgetragen. Auf diese Weise erhält man staubfreie Umhüllungs-Granulate.

Die nachstehenden Herstellungsbeispiele erläutern die Gewinnung hochreiner Pyrophosphite durch Dehydratisierung von Phosphiten in Suspension bei erhöhter Temperatur und Entfernen des gebildeten Wassers durch azeotrope Destillation.

## Herstellungsbeispiele

### H-1 Synthese von Dinatriumpyrophosphit unter Verwendung eines azeotropen Schleppmittels

221 g (2,125 Mol) $NaH_2PO_3$ werden mit 400 ml 1,2,4-Trichlorbenzol unter Rühren in einer mit einem Wasserabscheider versehenen Apparatur für 17 Stunden zum Sieden erhitzt, wobei die Masse zusammenbackt und zwischendurch entnommen und pulverisiert wird. Nach dem Erkalten wird abfiltriert.

Man isoliert 201 g (99,6 %) der Titelverbindung der Formel

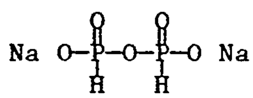

vom Fp. > 300 °C.

$^{31}$P-NMR ($D_2O$) $\delta$ = 4,89 ppm, $J_{PH}$ = 666 Hz; $^{1}$H-NMR ($D_2O$): $\delta$ = 7,1 ppm, $J_{PH}$ = 661 Hz

| | | |
|---|---|---|
| $H_2P_2O_5Na_2$ (189,95) | Ber. P 32,61 %<br>Gef. P 32,4 % | Na 24.21 %<br>Na 24.5 % |

### H-2. Synthese von Dilithiumpyrophosphit

Analog zu der in H 1.2 beschriebenen Verfahrensweise erhält man nach 7 stündigem Erhitzen von $LiH_2PO_3$ in 1,2,4-Trichlorbenzol die Titelverbindung der Formel

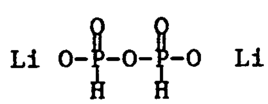

in quantitativer Ausbeute als Festkörper vom Fp. > 300 °C.

$^{31}$P NMR ($H_2O$) $\delta$ = 4,9 ppm

$^{1}$H NMR ($D_2O$) $\delta$ = 6,94 ppm, $J_{PH}$ = 673 Hz

### H-3 Synthese von Magnesiumpyrophosphit

Analog zu dem in H 1.2 beschriebenen Verfahrensweise erhält man nach 22 stündigem Erhitzen von $[Mg]_{0.5}\ H_2PO_3$ in 1,2,4-Trichlorbenzol die Titelverbindung der Formel

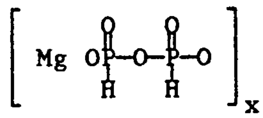

als schwer löslichen Festkörper.

H-4 Synthese von Aluminiumpyrophosphit

H-4.1 Synthese von Aluminiumphosphit

Zu einer Lösung von 30,3 g (0,369 Mol) phosphorige Säure in 100 ml Wasser werden 20 g (0,123 Mol) Aluminium-tri-ethanolat gegeben. Nach Abklingen der exothermen Reaktion wird für 14 Stunden bei Raumtemperatur belassen und danach zur Trockene eingedampft.

Man isoliert 32,9 g (99 %) der Titelverbindung der Formel

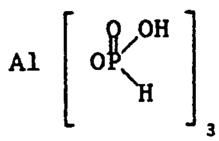

als einen Festkörper vom Fp. 195 °C (Zers.).

H-4.2 Synthese von Aluminiumpyrophosphit

8.0 g (0.03 Mol) Aluminiumphosphit werden 16 Stunden am Wasserabscheider in 1,2,4-Trichlorbenzol zum Sieden erhitzt. Danach wird das 1,2,4-Trichlorbenzol abdekantiert, der Rückstand in Dichlormethan aufgeschlämmt, abfiltriert und getrocknet.

Man isoliert 5,63 g (75,3 %) der Titelverbindung der Formel

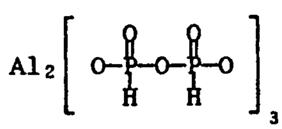

als einen in Wasser nicht löslichen Festkörper von Fp > 300 °C.

H-5 Synthese von Diammoniumpyrophosphit

Ammoniumphosphit wird in einer mit einem Wasserabscheider versehenen Apparatur für 3 Tage in siedendem 1,1,2-Trichlorethan belassen.

Man isoliert die Titelverbindung der Formel

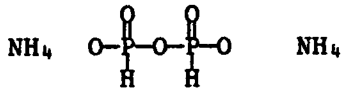

in 80%iger Ausbeute neben Restmengen an Ammoniumphosphit.

$^1$H-NMR ($D_2O$) $\delta$ = 7,4 ppm (PH, $J_{PH}$ = 676 Hz; $\delta$ = 5,8 ppm ($NH_4$)

Analog zu den vorstehenden Beispielen können die folgenden Salze der pyrophosphorigen Säure erhalten werden:

Dikaliumpyrophosphit ($K_2H_2P_2O_5$)

Calciumpyrophosphit ($CaH_2P_2O_5$)

Kupfer(II)pyrophosphit ($CuH_2P_2O_5$)
Zink(II)pyrophosphit ($Zn H_2P_2O_5$)
Kupfer(I)pyrophosphit ($Cu_2H_2P_2O_5$)
Bariumpyrophosphit ($BaH_2P_2O_5$)
Manganpyrophosphit ($MnH_2P_2O_5$)

Biologische Beispiele

B-1 Plasmopara viticola auf Reben

Residual protektive Blattapplikation

5 Wochen alte Rebensämlinge werden mit einer aus der formulierten Prüfsubstanz hergestellten Spritzbrühe (0,2 % Aktivsubstanz) besprüht und einen Tag später mit einer Sporangiensuspension (20'000 Sporangien/ml) von P. viticola infiziert. Die Inkubation erfolgt bei 20 °C in einer Gewächshauskabine; einer 14-stündigen Inkubationsphase mit 100 % rel. Luftfeuchtigkeit folgen 4 Tage mit 75 - 85 % und abschliessend zur Induktion der Pilzsporulation noch eine Nacht mit 100 %. Nach der 6-tägigen Inkubation wird der Pilzbefall ausgewertet (0 - 5 % = volle Wirkung).

| Wirkstoff | Pilzbefall |
|---|---|
| $MgH_2P_2O_5$ | < 20 % |
| $Li_2H_2P_2O_5$ | 0 - 5 % |
| $Na_2H_2P_2O_5$ | 0 - 5 % |
| *$Na_2H_2P_2O_5$ + Mancozeb | 0 - 5 % |

* Die Spritzbrühe enthielt 150 g/100 Liter $Na_2H_2P_2O_5$ und 120 g/100 Liter Mancozeb und wurde gleichfalls in 0,2 %ig. Konzentration geprüft.

B-2 Wirkung gegen Phytophthora infestans auf Tomatenpflanzen

Residual-protektive Wirkung

Tomatenpflanzen wurden nach 3-wöchiger Anzucht mit einer aus Spritzpulver des Wirkstoffes, wie oben beschriebenen hergestellten Spritzbrühe (0,2 % Aktivsubstanz) besprüht. Nach 24 Stunden wurden die behandelten Pflanzen mit einer Sporangiensuspension des Pilzes infiziert. Die Beurteilung des Pilzbefalls erfolgte nach einer Inkubation der infizierten Pflanzen während 5 Tagen bei 90 - 100 % Luftfeuchtigkeit und 20 °C.

| Wirkstoff | Pilzbefall |
|---|---|
| $Li_2H_2P_2O_5$ | 5- 20 % |
| $Na_2H_2P_2O_5$ | 5 - 10 % |

**Patentansprüche**

1. Pflanzenfungizides Mittel enthaltend eine fungizid wirksame Menge eines Salzes der pyrophosphorigen Säure der Formel I

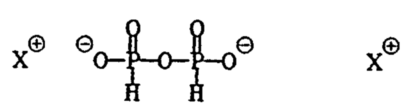 (I),

worin $X^{\oplus}$ für ein Kationenäquivalent ausgewählt aus der Gruppe Natrium, Kalium, Lithium, Beryllium,

Magnesium, Aluminium, Zink, Mangan, Kupfer oder $NH_4$ steht, zusammen mit einem geeigneten Trägermaterial.

**2.** Mittel gemäss Anspruch 1 enthaltend Dilithiumpyrophosphit.

**3.** Mittel gemäss Anspruch 1 enthaltend Dinatriumpyrophosphit.

**4.** Saatbeizmittel enthaltend eine Verbindung der Formel I gemäss Anspruch 1.

**5.** Mit einem Mittel gemäss Anspruch 4 gebeiztes Saatgut.

**6.** Verfahren zur Bekämpfung oder Verhütung eines Befalls von Pflanzen durch phytopathogene Pilze, dadurch gekennzeichnet, dass man ein Salz der pyrophosphorigen Säure der Formel I

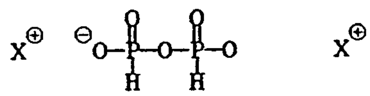 (I),

worin $X^{\oplus}$ für ein Kationenäquivalent, ausgewählt aus der Gruppe Natrium, Kalium, Lithium, Beryllium, Magnesium, Aluminium, Zink, Kupfer oder $NH_4$ steht, auf die Pflanze oder deren Lebensraum appliziert.

**Claims**

**1.** A fungicidal composition for protecting plants comprising a fungicidally effective amount of a salt of pyrophosphorous acid of formula I

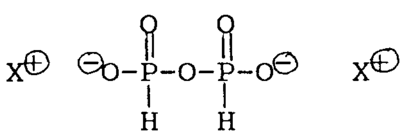 (I)

wherein $X^{\oplus}$ is a cation equivalent selected from the group consisting of sodium, potassium, lithium, beryllium, magnesium, aluminium, zinc, manganese, copper and $NH_4$, together with a suitable carrier.

**2.** A composition according to claim 1, which comprises dilithium pyrophosphite.

**3.** A composition according to claim 1, which comprises disodium pyrophosphite.

**4.** A seed dressing composition which comprises a compound of formula I according to claim 1.

**5.** Seeds dressed with a composition according to claim 4.

**6.** A method of controlling phytopathogenic fungi or of protecting plants from attack by said fungi, which comprises applying to the plant or to the locus thereof a salt of pyrophosphorous acid of formula I

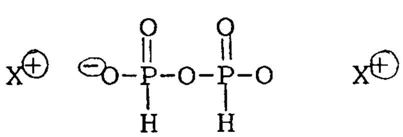 (I)

wherein $X^{\oplus}$ is a cation equivalent selected from the group consisting of sodium, potassium, lithium, beryllium, magnesium, aluminium, zinc, copper and $NH_4$.

## Revendications

**1.** Produit fongicide pour application sur les végétaux, contenant une quantité fongicide efficace d'un sel de l'acide pyrophosphoreux de formule I

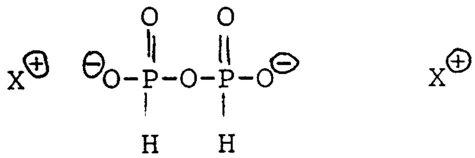 (I),

dans laquelle $X^{\oplus}$ représente un équivalent d'un cation choisi parmi le sodium, le potassium, le lithium, le béryllium, le magnésium, l'aluminium, le zinc, le manganèse, le cuivre ou $NH_4$, avec un véhicule approprié.

**2.** Produit selon revendication 1, contenant du pyrophosphite dilithique.

**3.** Produit selon revendication 1, contenant du pyrophosphite disodique.

**4.** Produit désinfectant pour semences, contenant un composé de formule I de la revendication 1.

**5.** Semences désinfectées par un produit selon revendication 4.

**6.** Procédé pour combattre ou prévenir une attaque de végétaux par des mycètes phytopathogènes, caractérisé en ce que l'on applique sur la plante ou son habitat un sel de l'acide pyrophosphoreux répondant à la formule I

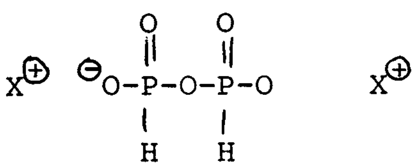 (I),

dans laquelle $X^{\oplus}$ représente un équivalent d'un cation choisi parmi le sodium, le potassium, le lithium, le béryllium, le magnésium, l'aluminium, le zinc, le cuivre ou $NH_4$.